# EUROPEAN PATENT APPLICATION

(11) **EP 2 730 767 A2**
(43) Date of publication of application: **14.05.2014**
(21) Application number: 13191684.3
(22) Date of filing: 05.11.2013
(51) Int. Cl.: F02C 7/143, F02C 7/18

(54) **Systems and methods for active component life management for gas turbine engines**

(30) Priority: 07.11.2012 US 201213670504
(71) Applicant: General Electric Company, Schenectady, New York 12345 (US)
(72) Inventor: Ekanayake, Sanji, Atlanta, GA Georgia 30339 (US); Smith, Raub Warfield, Schenectady, NY New York 12345 (US); Scipio, Alston Ilford, Atlanta, GA Georgia 30339 (US); Hartman, Steven, Atlanta, GA Georgia 30339 (US); Hoskin, Robert Frank, Atlanta, GA Georgia 30339 (US)
(74) Representative: Cleary, Fidelma

(57) **Abstract**

The present application thus provides an active cooling system (100) for a compressor (15) and a turbine (40) of a gas turbine engine (10). The active cooling system may include an air extraction pipe (70,80) extending from the compressor (15) to the turbine (40), a heat exchanger (130,140) positioned about the air extraction pipe (70,80), and an external air cooling system (150) in communication with the air extraction pipe (70,80).

## Description

### TECHNICAL FIELD

The present invention relates generally to gas turbine engines and more particularly relate to active component life management systems and methods to provide additional cooling to compensate for peak, low, and ultra-low load operations and other types of operational parameters.

### BACKGROUND OF THE INVENTION

Gas turbine engines generally use bleed air from one or more stages of a compressor to provide cooling and/or sealing of the components along the hot gas path within the turbine. Air may be extracted from the compressor and routed externally or internally to the locations that require cooling in the turbine, defined herein as a turbine cooling circuit. Any air compressed in the compressor and not used in generating combustion gases, however, generally reduces the overall efficiency of the gas turbine engine. Conversely, increased temperatures in the turbine may have an impact on emission levels and the lifetime of the components positioned along the hot gas path and elsewhere. Generally described, operations above base load will reduce the lifetime of the hot gas path components while operations below base load generally will extend component lifetime.

An exception to this relationship, however, may be found with respect to the nozzles and buckets of the stages aft of the first turbine stage. These aft stage inlet gas temperatures may be higher at peak fire than at base load and higher still at extended turndown or very low loads and firing temperatures. Gas turbine engines typically are designed for continuous base load operations with minimized cooling flows to the stages in order to maximize thermal efficiency. Given such, low load operations may be detrimental to the components in the aft stages while peak load operations may be detrimental to the components in all of the stages of the turbine.

There is thus a desire for improved systems and methods for cooling components in the hot gas path, particularly along the aft stages, so as to provide increased component lifetime. Moreover, there is a desire to provide active cooling management to all stages so as to extend overall operations beyond current boundaries in certain types of operating conditions.

### SUMMARY OF THE INVENTION

The present invention thus provides an active cooling system for a compressor and a turbine of a gas turbine engine. The active cooling system may include an air extraction pipe extending from the compressor to the turbine, a heat exchanger positioned about the air extraction pipe, and an external air cooling system in communication with the air extraction pipe.

The present invention further provides a method of actively cooling hot gas path components in a turbine. The method may include the steps of determining a temperature of the hot gas path components, determining a load on the turbine, conditioning an air extraction to the turbine, and providing a flow of external air to the air extraction.

The present invention further provides an active cooling system for a compressor and a turbine of a gas turbine engine. The active cooling system may include one or more air extraction pipes extending from an intermediate stage of the compressor to a stage of the turbine, one or more heat exchangers positioned about the air extraction pipes, and an external air cooling system in communication with the air extraction pipes.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine showing a compressor, combustor, a turbine, and a load.
Fig. 2 is a schematic diagram of an active cooling system as may be described herein.
Fig. 3 is a schematic diagram of a portion of a turbine with an infrared camera.
Fig. 4 is a flowchart showing method steps in an active cooling method as may be described herein.

### DETAILED DESCRIPTION

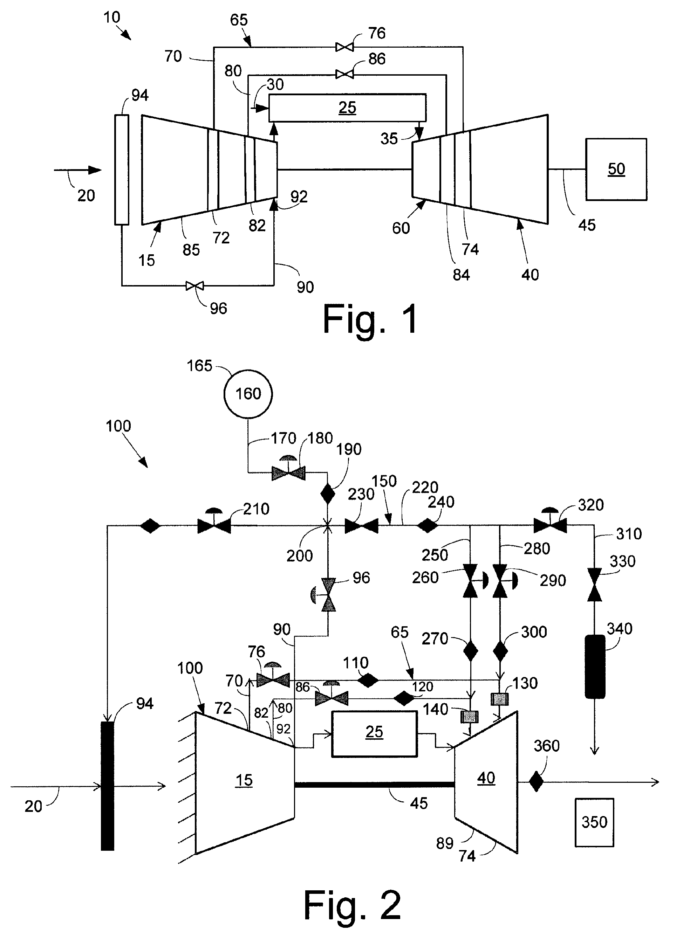

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, liquid fuels, various types of syngas, and/or other types of fuels. The gas turbine engine 10 may be any one of a number of different gas turbine engines offered various manufacturers globally. The gas turbine engine 10 may have different configurations and may use other types of components. Multiple gas turbine engines, other types of turbo-machinery, and other types of power generation equipment also may be used herein together.

As described above, the compressor 15 may include a number of compressor stages 55 therein. Likewise, the turbine 40 also may have any number of turbine stages 60 therein. The gas turbine engine 10 thus may use a number of air extractions 65 to provide cooling air from the compressor 15 to the turbine 40. In this example, a 9th stage extraction pipe 70 may extend from a ninth stage 72 of the compressor 15 to a third stage 74 of the turbine 40. A ninth stage extraction control valve 76 may be positioned thereon. Likewise, the gas turbine engine 10 may have a thirteenth stage extraction pipe 80 extending from a thirteenth stage 82 of the compressor 15 to a second stage 84 of the turbine 40. A thirteenth stage extraction control valve 86 may be positioned thereon. A compressor discharge extraction pipe 90 may extend from a compressor discharge 92 to an inlet bleed heat manifold 94 or other location. The inlet bleed heat manifold 94 may be positioned about an inlet of the compressor 15. An inlet bleed heat manifold valve 96 may be used to control flow thereto. The extraction pipes may be internal or external to the turbine casing. Other components and other configurations may be used herein.

Fig. 2 shows an active cooling system 100 as may be used herein. The active cooling system 100 may be used with the gas turbine engine 10 as described above and the like. The active cooling system 100 may actively cool the components of the turbine 40 along the hot gas path therethrough, particularly about the third stage 74 and the second stage 89.

The active cooling system 100 may include a ninth stage flow and temperature sensor 110 positioned about the ninth stage extraction pipe 70. Likewise, the active cooling system 100 may include a thirteenth stage flow and temperature sensor 120 positioned about the thirteenth stage extraction pipe 80. The flow and temperature sensors 110, 120 may be of conventional design. The flow and temperature sensors 110, 120 thus determine the flow rate and temperature of the flow of air 20 in the extraction pipes 70,80.

The active cooling system 100 also may include a ninth stage heat exchanger 130 positioned about the ninth stage extraction pipe 70. Likewise, the active cooling system 100 may include a thirteenth stage heat exchanger 140 positioned about the thirteenth stage extraction pipe 80. The heat exchangers 130, 140 may be of conventional design. The heat exchangers 130, 140 may be in communication with any heating or cooling medium from any source. Other components and other configurations may be used herein.

The active cooling system 100 also may include an external cooling system 150. The external cooling system 150 may include one or more external cooling air sources 160. The external cooling air sources 160 may be any source of a flow of hot and/or cold external air 165. The external cooling air source 160 may be in communication with an external air intake line 170. The external air intake line 170 may have an external air intake valve 180 and an external air flow and temperature sensor 190 positioned thereon.

The external air intake line 170 may extend to an intake valve 200. The intake valve 200 may be of conventional design. Other types of multidirectional valves may be used herein. The intake valve 200 may connect the external air intake line 170 with the compressor discharge extraction pipe 90. An external air compressor discharge valve 210 may be positioned downstream thereof. The intake valve 200 also may extend to a turbine flow line 220. A turbine flow line block valve 230 and a turbine flow and temperature sensor 240 may be positioned thereon.

The turbine flow line 220 may extend to a second stage external air line 250. The second stage external air line 250 may include a second stage control valve 260 and a second stage flow and temperature sensor 270 positioned thereon. The second stage external air line 250 may extend to the thirteenth stage extraction pipe 80 upstream of, or directly to, the thirteenth stage heat exchanger 140. The turbine flow line 220 also may extend to a third stage external air line 280. The third stage external air line 280 may have a third stage control valve 290 and a third stage flow and temperature sensor 300 positioned thereon. The third stage external air line 280 may extend to the ninth stage extraction pipe 70 upstream of, or directly to, the ninth stage heat exchanger 130. The turbine flow line 220 also may extend to a silencer external air line 310. The silencer external air line 310 may have a silencer control valve 320 and a silencer block valve 330 positioned thereon. The silencer external air line 310 may lead to a silencer 340. Other components and other configurations may be used herein.

The active cooling system 100 may be operated by a cooling controller 350. The cooling controller 350 may be in communication with the overall control system of the gas turbine engine or integrated therewith. The cooling controller 350 may receive feedback from the various flow sensors so as to operate the various control valves and block valves as appropriate so as to control the temperature of the air extractions 65 as well as the temperature of the hot gas path components.

The cooling controller 350 of the active cooling system 100 described herein thus monitors the flow rate and temperature within the ninth stage extraction pipe 70 and the thirteenth stage extraction pipe 80 as well as the temperature of the hot gas path components within the turbine 40 and the load conditions thereon. The temperature of the air extractions 65 thus may be varied via the heat exchangers 130, 140. Likewise, the temperature of the air extraction 65 also may be varied via the external cooling system 150 providing the flow of external air 165 thereto. Alternatively, the external cooling system 150 may route the flow of external air 165 to the silencer 340 or elsewhere.

The cooling controller 350 also may compensate for the variable cooling flow provided by the active cooling system 100. An exhaust flow and temperature sensor 360 may be positioned downstream of the turbine 40 so as to determine the exhaust gas temperature. Because the gas turbine engine 10 may be controlled to an exhaust temperature control schedule, the cooling controller 350 may receive input from the exhaust flow and temperature sensor 360, as well as the thirteenth stage flow and temperature sensor 120 and the ninth stage flow and temperature sensor 110, so as to provide an adequate compensation factor for the additional cooling air. The cooling controller 350 thus may provide stage level time at temperature tracking and management.

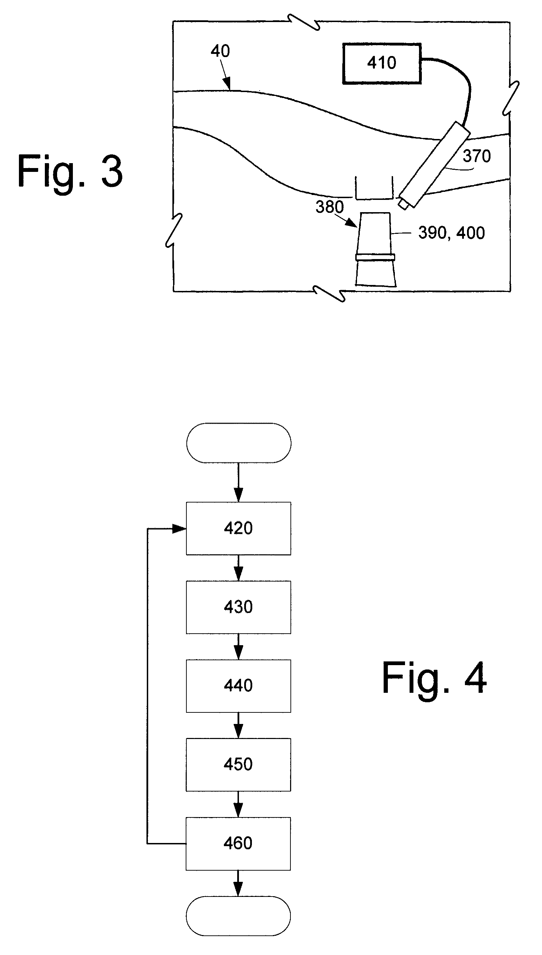

Moreover, other types of temperature and component sensors may be used herein. For example, Fig. 3 shows an optical system such as an infrared camera 370 positioned about a hot gas path component 380. The hot gas path component 380 may be a blade 390, a vane 400, or other type of component positioned within the turbine 40. The infrared camera 370 may be of conventional design. The infrared camera 370 may capture a temperature distribution along the hot gas path component 380. The infrared camera 370 or other type of device may be in communication with the cooling controller 350. Diagnostic algorithms may be used to produce a condition index that reflects either the overall condition of the component surface or the condition of a specific location along the surface. Local defects, such as oxidation and spallation, may show up as aberrations about the location on the component surface. The condition index thus may be used as an indicator for the condition of the component or a portion thereof. The infrared camera 370 may include a trigger 410 for use with rotating hot gas path components. Similar types of pyrometer systems and other types of optical systems also may be used herein in a similar manner. Other components and other configurations also may be used herein.

Fig. 4 shows a flowchart showing the various steps in implementing the active cooling system 100 over extended use. At step 420, the active cooling system 100 supplies actively controlled and measured air extractions 65 to cool the hot gas path components 380 as is described above. At step 430, the active cooling system 100 may derive surface temperature estimates for the hot gas path components 380. The estimate may be determined by measuring the exhaust gas temperature with the exhaust gas flow and temperature sensor 360, by measuring the turbine cooling flows via the ninth stage flow and temperature sensor 110 and the thirteenth stage flow and temperature sensor 120, by optical systems such as the infrared camera 370, and the like. At step 440, the active cooling system 100 may monitor the temperature of the hot gas path components 380 over time and may construct hot gas path component operation histories. At step 450, the active cooling system 100 may predict the lifetime of the hot gas path components 380 using the estimated hot gas path component temperature operational histories. This step may be based on, for example, the condition index described above as well as the diagnostic algorithms using the output of the infrared camera 370 and other devices. A component lifetime may be determined by a correlation between operating time and operating cycles based on an evaluation of high temperature components having similar fatigue configurations and similar fatigue dimensions as the hot gas path components 380.

At step 460, the active cooling system may adjust the air extractions 65 to increase or decrease the estimated hot gas path component temperatures so as to increase or decrease the lifetime of the hot gas path components so as to achieve desired hot gas path component lifetimes. An overall increase in the lifetime of the hot gas path components 380 thus may be achieved by actively cooling the components so as to compensate for certain operational parameters. The methods steps described herein may be carried out in varying order. Not all of the method steps may be used herein. Moreover, additional method steps also may be used herein.

The active cooling system 100 thus may control the temperature of the hot gas path components 380, particularly in operating conditions such as peak loads and low loads, so as to provide increased cooling as required. The active cooling system 100 permits selective over-cooling of the impacted components with a variable cooling flow based on the temperature compensation scheme described herein to adequately control the overall load. Moreover, selectively overcooling all of the stages of the turbine 40 may provide active component life management so as to extend overall gas turbine engine performance beyond current boundaries for a length of time in the context of additional authority for peak over-firing.

The active cooling system 100 thus improves the lifetime of the hot gas path components 380 by compensating for the increased heat produced during peak operations, extended turndown operations, and other types of operational parameters. Moreover, the active cooling system 100 adds the ability to operate beyond normal peak loads for limited amounts of time. The active cooling system 100 thus may improve overall gas turbine engine lifestyle economics while providing operational flexibility in a relatively low cost system.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

Various aspects and embodiments of the present invention are defined by the following numbered clauses:
1. A method of actively cooling hot gas path components in a turbine, comprising:
   determining a temperature of the hot gas path components;
   determining a load on the turbine;
   conditioning an air extraction to the turbine; and
   providing a flow of external air to the air extraction.
2. The method of clause 1, further comprising the step of creating operational histories for the hot gas path components based upon the determining steps.
3. The method of clause 1 or 2, further comprising the step of predicting the lifetime of the hot gas path components based upon the operational histories.
4. The method of any preceding clause, further comprising the step of altering the temperature of the air extraction based upon the predicted lifetime.
5. The method of any preceding clause, wherein the step of determining the temperature of the hot gas path components comprises measuring an exhaust gas temperature.
6. The method of any preceding clause, wherein the step of determining the temperature of the hot gas path components comprises optically capturing a temperature distribution thereof.
7. The method of any preceding clause, further comprising the step of creating a condition index based upon the temperature distribution.
8. An active cooling system for a compressor and a turbine of a gas turbine engine, comprising:
   one or more air extraction pipes extending from an intermediate stage of the compressor to a stage of the turbine;
   one or more heat exchangers positioned about the one or more air extraction pipes; and
   an external air cooling system in communication with the one or more air extraction pipes.
9. The active cooling system of any preceding clause, wherein the one or more air extraction pipes comprise a ninth stage air extraction pipe extending from a ninth stage of the compressor to a third stage of the turbine and a thirteenth stage air extraction pipe extending from the thirteenth stage of the compressor to a second stage of the turbine and wherein the one or more heat exchangers comprise a ninth stage heat exchanger positioned about the ninth air extraction pipe and a thirteenth stage heat exchanger positioned about the thirteenth air extraction pipe.

## Claims

1. An active cooling system (100) for a compressor (15) and a turbine (40) of a gas turbine engine (10), comprising:
an air extraction pipe (70,80) extending from the compressor (15) to the turbine (40);
a heat exchanger (130,140) positioned about the air extraction pipe (70,80); and
an external air cooling system (150) in communication with the air extraction pipe.

2. The active cooling system of claim 1, wherein the air extraction pipe comprises a plurality of air extraction pipes (70,80) extending towards the turbine (40).

3. The active cooling system of claim 1 or 2, wherein the air extraction pipe comprises an intermediate stage extraction pipe (70) extending to the turbine (40).

4. The active cooling system of claim 1, 2 or 3, wherein the air extraction pipe comprises a thirteenth stage extraction pipe (80) extending to a second stage of the turbine.

5. The active cooling system of any preceding claim, wherein the air extraction pipe (70,80) comprises a flow and temperature sensor thereon (110,120).

6. The active cooling system of any preceding claim, wherein the external air cooling system (150) comprises an external air in-take line (170) in communication with a flow of external air (165).

7. The active cooling system of claim 6, wherein the external air cooling system (150) comprises a stage external air line (170) in communication with the flow of eternal air (165) and the air extraction pipe (80).

8. The active cooling system of claim 7, wherein the stage external air line (170) comprises a flow and temperature sensor thereon (190).

9. The active cooling system of any preceding claim, further comprising a flow and temperature sensor (360) downstream of the turbine (40).

10. The active cooling system of any preceding claim, further comprising an infrared camera (370) positioned about the turbine (40).

11. The active cooling system of claim 10, wherein the turbine (40) comprises a plurality of hot gas path components (380) therein and wherein the infrared camera (370) is positioned about the plurality of hot gas path components (380).

12. A method of actively cooling hot gas path components (380) in a turbine (40), comprising:
determining (430) a temperature of the hot gas path components (380);
determining a load on the turbine (40);
conditioning (460) an air extraction to the turbine (40); and
providing a flow of external air to the air extraction.

13. The method of claim 12, further comprising the step of creating operational histories for the hot gas path components (380) based upon the determining steps.

14. The method of claim 13, further comprising the step of predicting (450) the lifetime of the hot gas path components (380) based upon the operational histories.

15. The method of claim 14, further comprising the step of altering the temperature of the air extraction based upon the predicted lifetime.
